# EUROPEAN PATENT APPLICATION

(11) **EP 4 636 145 A1**
(43) Date of publication of application: **22.10.2025**
(21) Application number: 23903539.7
(22) Date of filing: 13.12.2023
(51) Int. Cl.: D03D 15/547, B32B 5/26, D03D 1/00, D03D 11/00, D03D 15/553, G02B 26/06, G02F 1/01, H01L 33/00

(54) **TEXTILE**

(30) Priority: 14.12.2022 JP 2022199563; 14.12.2022 JP 2022199564; 14.12.2022 JP 2022199764
(71) Applicant: ZOZO, Inc., Chiba-shi, Chiba, 263-0023 (JP)
(72) Inventor: NAKAMARU, Satoshi, Chiba-shi, Chiba 263-0023 (JP); TAJIMA, Kotaro, Chiba-shi, Chiba 263-0023 (JP); SAJI, Michika, Chiba-shi, Chiba 263-0023 (JP); SASAKI, Kayato, Chiba-shi, Chiba 263-0023 (JP)
(74) Representative: Hoffmann Eitle
(86) International application number: PCT/JP2023/044655
(87) International publication number: WO 2024/128255

(57) **Abstract**

Textile design expression is to be enhanced. A textile according to the present application is characterized in that the textile includes: colored threads having a variable optical property; and structurally colored threads that implement a structural color by having a structure that reflects light from incident light, the light having wavelengths different from one another.

## Description

### Field

The present invention relates to textiles.

### Background

There is a demand for incorporation of electronic circuits into fabrics (or articles that can be made from fabrics) in many industries, such as the interior industry, the fashion industry, and the car industry. A technique using textiles called smart textiles has been known as a technique for meeting this demand (Patent Literature 1 cited below).

Furthermore, a structural color is a color that is visible through a coloring phenomenon resulting from dispersion of light, the coloring phenomenon depending on a microstructure equal to or smaller than a wavelength of light. A technique for artificially making a structural color by periodically layering liquid crystal materials or materials having different refractive indices has been known conventionally (Patent Literature 2 cited below). Furthermore, using characteristics in decoration technology has been known, the characteristics including appearances changing according to luster of structural colors and viewed angles.

### Citation List

### Patent Literature

Patent Literature 1: Japanese Unexamined Patent Application Publication No. 2022-143546
Patent Literature 2: Japanese National Publication of International Patent Application No. 2020-535987

### Summary

### Technical Problem

However, conventional techniques have failed to dynamically control structural colors.

In view of the above, an object of the present application is to enable enhancement of textile design expression by enabling dynamic control of structural colors.

### Solution to Problem

According to the present application, a textile, includes colored threads having a variable optical property, and structurally colored threads that implement a structural color by having a structure that reflects light from incident light, the light having wavelengths different from one another.

### Advantageous Effects of Invention

According to an aspect of an embodiment, an effect of enabling enhancement of textile design expression is achieved.

### Brief Description of Drawings

FIG. 1A is a diagram illustrating an example of a method of manufacturing a textile, according to an embodiment (No. 1: preparation).
FIG. 1B is a diagram illustrating the example of a method of manufacturing a textile, according to the embodiment (No. 2: lamination).
FIG. 1C is a diagram illustrating the example of a method of manufacturing a textile, according to the embodiment (No. 3: slitting).
FIG. 1D is a diagram illustrating the example of a method of manufacturing a textile, according to the embodiment (No. 4: weaving).
FIG. 2A is a diagram illustrating an example of a structure of a foil thread according to the embodiment (No. 1: a case where a structurally colored layer is arranged under a surface).
FIG. 2B is a diagram illustrating an example of a structure of a foil thread according to the embodiment (No. 2: a case where a structurally colored layer is arranged on a surface).
FIG. 3 is a diagram illustrating a thickness of a substrate, a thickness of a colored layer, and a width, of a foil thread according to the embodiment.
FIG. 4 is a diagram illustrating an example of a configuration of an information processing system according to the embodiment.
FIG. 5A is a diagram illustrating an example of a method of manufacturing a textile, according to the embodiment (No. 1: preparation).
FIG. 5B is a diagram illustrating the example of a method of manufacturing a textile, according to the embodiment (No. 2: slitting).
FIG. 5C is a diagram illustrating the example of a method of manufacturing a textile, according to the embodiment (No. 3: weaving).
FIG. 6A is a diagram illustrating an example of a method of manufacturing a textile, according to the embodiment (No. 1: preparation).
FIG. 6B is a diagram illustrating the example of a method of manufacturing a textile, according to the embodiment (No. 2: slitting).
FIG. 6C is a diagram illustrating the example of a method of manufacturing a textile, according to the embodiment (No. 3: weaving).
FIG. 6D is a diagram illustrating the example of a method of manufacturing a textile, according to the embodiment (No. 4: weaving).
FIG. 7 is a diagram illustrating an example of a configuration of an information processing system according to the embodiment.

### Description of Embodiments

A mode for implementing a textile according to the present application (hereinafter, referred to as an "embodiment") will hereinafter be described in detail while reference is made to the drawings. The textile according to the present application is not to be limited by the embodiment. Furthermore, with respect to the following embodiment, the same reference sign will be assigned to portions that are the same and redundant description thereof will be omitted.

### Embodiment

### 1. Example of Information Processing

Structural colors are used in design of clock dials and architecture, for example, because ink and vapor deposition of materials, for example, can be used in manufacturing flat materials, such as aluminum and plastic materials. However, for materials, such as textiles, which are soft (supple) and textured, threads using a special spinning process is needed and application of structural colors to these materials is thus limited. Furthermore, structural colors have a characteristic of changing in design according to viewed angles and backgrounds and are often dependent on surrounding ambient light and observed positions.

In view of the above, an object of the present application is to enable enhancement of design expression for soft and textured textiles, such as clothes and curtains, by enabling dynamic control of structural colors.

In an embodiment hereinafter, a textile 100 is a textile formed by weaving the warp and the weft together. For example, the textile 100 is a textile having a 3-ply structure formed of the warp, the weft, and weaving yarn. The textile 100 is a textile formed as any of three types described hereinafter. Specifically, the textile 100 may be: (1) a textile characterized in that a colored layer having a variable optical property and a structurally colored layer implementing a structural color by having a structure that reflects light from incident light, the light having wavelengths different from one another, are included in at least any one of the warp and the weft; (2) a textile formed by weaving threads (corresponding to colored threads) including a colored layer and threads (corresponding to structurally colored threads) including a structurally colored layer together; or (3) a textile formed by superimposing a textile (corresponding to a colored textile) including colored threads and a textile (corresponding to a structurally colored textile) including structurally colored threads on each other. Details of each of these textiles will be described hereinafter.

### Case Where Colored Layer and Structurally Colored Layer Are Included in Single Thread

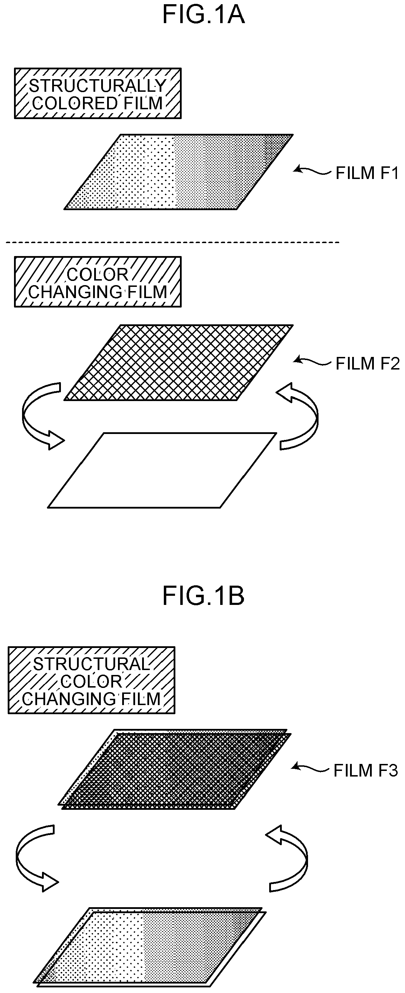

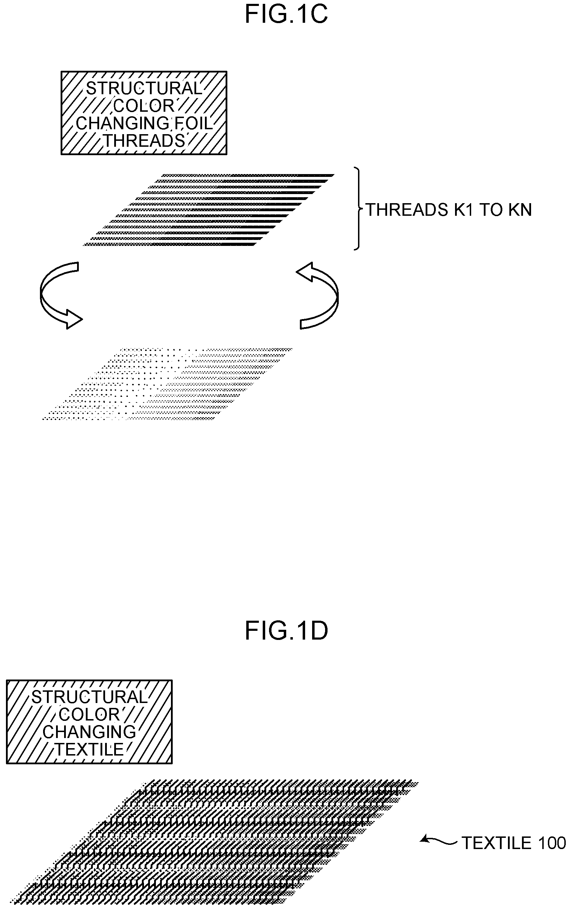

FIG. 1 is a diagram illustrating an example of a method of manufacturing a textile, according to the embodiment. FIG. 1A is a diagram illustrating preparation (sheet preparation) for manufacturing the textile. A film F1 is a film (corresponding to a structurally colored film) that implements a semitransparent structural color, and a film F2 is a film (corresponding to a color changing film) that is soft and has a variable optical property. The optical property of the film F2 is changed through control by a control device 10. For example, as to the optical property of the film F2, a property of reflecting light of a transparent color is changed to a property of reflecting light of an intense color, through control by the control device 10. Furthermore, for example, as to the optical property of the film F2, a property of reflecting light of a bright color is changed to a property of reflecting light of a dark color, through control by the control device 10.

FIG. 1B is a diagram illustrating lamination for manufacturing the textile. A film F3 is a film (corresponding to a structural color changing film) having the film F2 laminated under the film F1. The change in the optical property of the part (colored layer) corresponding to the film F2 through the control by the control device 10 changes the structural color of the part (structurally colored layer) corresponding to the film F1.

FIG. 1C is a diagram illustrating slitting for manufacturing the textile. A thread K1 to a thread KN are threadlike pieces (foil threads) (corresponding to structural color changing foil threads) formed by cutting the film F3 into long and thin pieces. Therefore, these foil threads from the thread K1 to the thread KN have the colored layer (the part corresponding to the film F2) and the structurally colored layer (the part corresponding to the film F1). The change in the optical property of the colored layer of the foil threads from the thread K1 to the thread KN through the control by the control device 10 changes the structural color of their structurally colored layer. Furthermore, the structural color of the structurally colored layer may be changed by a change in the optical property of the colored layer of the foil threads from the thread K1 to the thread KN through control by the control device 10, the change being according to a viewing angle of a user, the viewing angle being based on positional information on the user. This positional information on the user may be estimated by the control device 10. Each of the thread K1 to the thread KN is capable of being independently controlled through control by the control device 10. Only a specific region of the foil threads from the thread K1 to the thread KN may be able to be controlled by short-circuiting.

FIG. 1D is a diagram illustrating weaving for manufacturing the textile. The textile 100 is a textile product (textile) (corresponding to a structural color changing textile) formed by weaving the thread K1 to the thread KN together. For example, in a case where the thread K1 to the thread KN are the warp, the textile 100 is a textile product formed by weaving the thread K1 to the thread KN, the warp, and the weft that is threads different from the thread K1 to the thread KN, together. Furthermore, for example, in a case where the thread K1 to the thread KN are the weft, the textile 100 is a textile product formed by weaving the thread K1 to the thread KN, the weft, and the warp that is threads different from the thread K1 to the thread KN, together. An optical property of the colored layer of the foil threads from the thread K1 to the thread KN is changed through control by the control device 10, the structural color of their structurally colored layer is thereby changed, and the textile 100 is thus changed in design. As described above, because the foil threads are weaved together, the design of the textile is able to be changed dynamically, the foil threads having: the colored layer, which is soft; and the structurally colored layer, which is semitransparent and is formed on the colored layer, the colored layer and the structurally colored layer having been layered over each other.

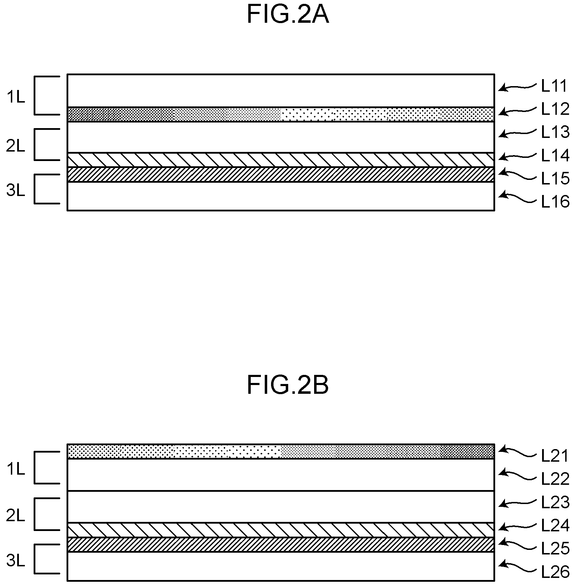

FIG. 2 is a diagram illustrating examples of a structure of the foil thread according to the embodiment. The foil thread according to the embodiment may be a thread having a three-layer structure. FIG. 2A is a diagram illustrating a structure in a case where the structurally colored layer of the foil thread is arranged under a surface so that the structurally colored layer is not at the surface. L11 is a substrate, L12 is the structurally colored layer, L13 is a substrate, L14 is a leuco layer, L15 is a heater layer, and L16 is a substrate. A combination of the leuco layer and the heater layer corresponds to the colored layer. Each of a combination of L11 and L12, a combination of L13 and L14, and a combination of L15 and L16 corresponds to one layer of the three-layer structure. Arranging the structurally colored layer under the surface as illustrated in FIG. 2A makes it difficult for the structurally colored layer to be damaged and thus enables durability to be improved.

FIG. 2B is a diagram illustrating a structure in a case where the structurally colored layer of the foil thread is arranged on the surface such that the structurally colored layer is at the surface. L21 is the structurally colored layer, L22 is a substrate, L23 is a substrate, L24 is a leuco layer, L25 is a heater layer, and L26 is a substrate. Similarly to the case of FIG. 2A, each of a combination of L21 and L22, a combination of L23 and L24, and a combination of L25 and L26 corresponds to one layer of the three-layer structure. Arranging the structurally colored layer on the surface as illustrated in FIG. 2B enables expression that is even more vivid and thus enhancement of design expression.

The substrate according to the embodiment may be a substrate that transmits only light of a specific wavelength therethrough. In a case where the substrate according to the embodiment is a substrate that transmits only light of a specific wavelength therethrough, the structural color is changed by the light transmitted and the control of the optical property of the colored layer.

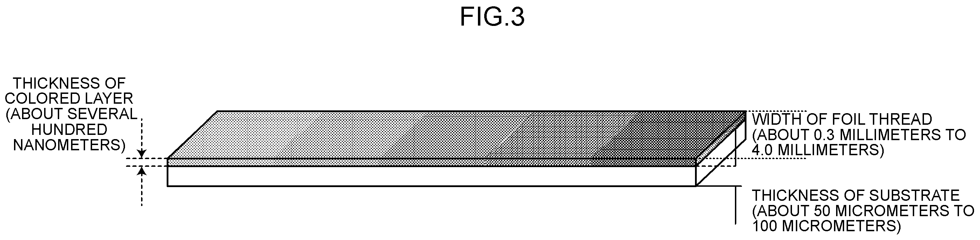

Furthermore, preferably, the substrates according to the embodiment each have a thickness of about 50 µm to 100 µm, the colored layer has a thickness of about several hundred nm, and the foil threads each have a width of about 0.3 mm to 4.0 mm (see FIG. 3).

Furthermore, the colored layer according to the embodiment is not limited to the combination of the leuco layer and the heater layer (a combination of a leucopigment and a heater), and may instead be electronic paper, a variable transparency film of, for example, polymer dispersed liquid crystal, or a combination (for example, a soft material or device that emits light) including organic electronic luminescent (EL), a light emitting diode (LED), an optical fiber, or a diffuser.

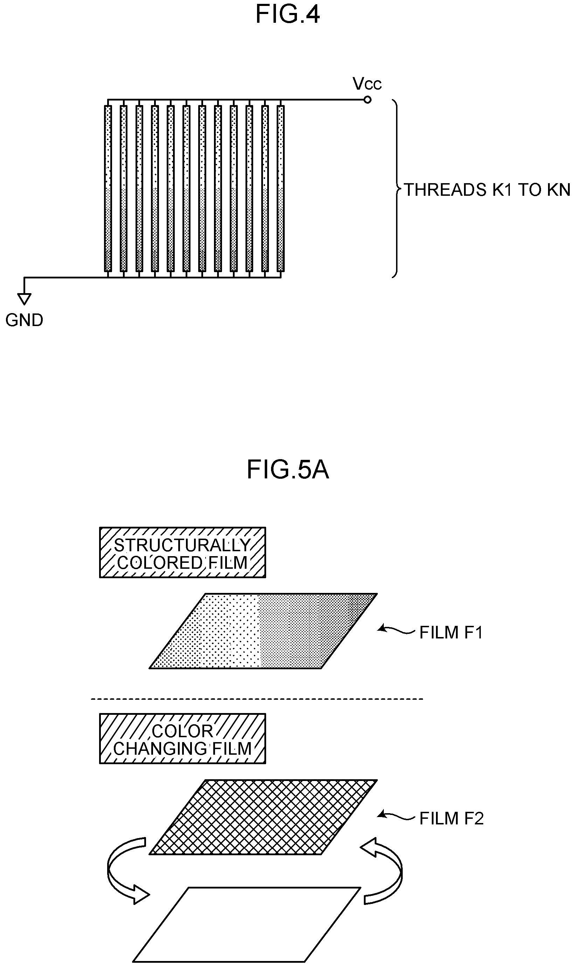

FIG. 4 is a diagram illustrating an example of a structure of wiring of a circuit according to the embodiment. The thread K1 to the thread KN are each the foil thread according to the embodiment. An electrode of the colored layer in the foil thread according to the embodiment may be exposed on the surface. Exposing the electrode of the colored layer on the surface facilitates contact and thus facilitates control by the control device 10.

An area of the structurally colored layer in the foil thread according to the embodiment may be exposed on the surface, the area being equal to or larger than a predetermined threshold. For example, a ratio of the area of the exposed portion of the structurally colored layer in the foil thread according to the embodiment to the area of the structurally colored layer may be equal to or larger than a predetermined threshold, or the ratio of the area of the exposed portion of the structurally colored layer to the area of the textile may be equal to or larger than a predetermined threshold.

### Case Where Colored Threads and Structurally Colored Threads Are Included

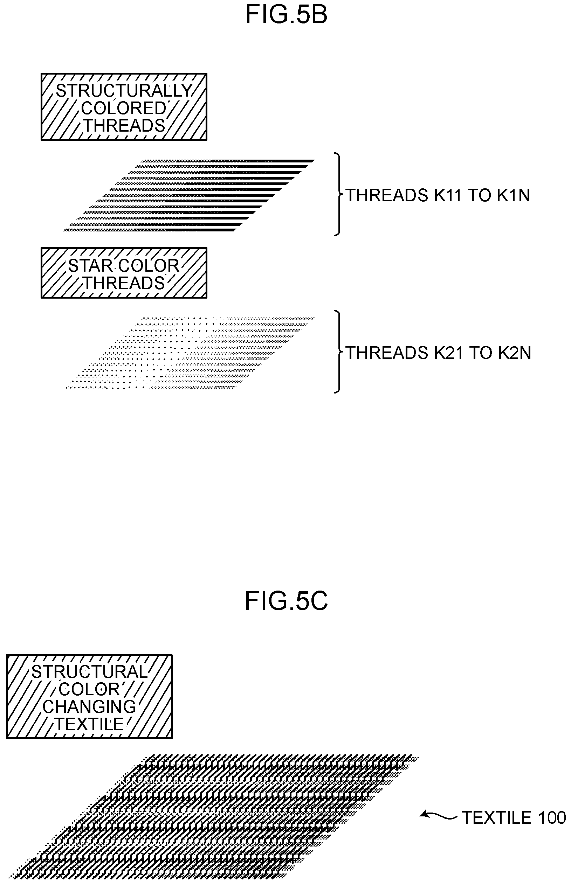

FIG. 5 is a diagram illustrating an example of a method of manufacturing a textile, according to the embodiment. Description similar to that for FIG. 1 will be omitted as appropriate. FIG. 5A is a diagram illustrating preparation for manufacturing the textile. A film F1 is a film that implements a semitransparent structural color and a film F2 is a film that is soft and has a variable optical property.

FIG. 5B is a diagram illustrating slitting for manufacturing the textile. A thread K11 to a thread K1N are threadlike pieces (structurally colored threads) formed by cutting the film F1 into long and thin pieces. Therefore, these foil threads from the thread K11 to the thread K1N each have a structurally colored layer (corresponding to the film F1). Furthermore, a thread K21 to a thread K2N are threadlike pieces (colored threads) formed by cutting of the film F2 into long and thin pieces. Therefore, these foil threads from the thread K21 to the thread K2N each have a colored layer (corresponding to the film F2).

FIG. 5C is a diagram illustrating weaving for manufacturing the textile. A textile 100 is a textile product (textile) formed by weaving the thread K11 to the thread K1N and the thread K21 to the thread K2N together. For example, the textile 100 is a textile product formed by weaving the thread K11 to the thread K1N, the weft, and the thread K21 to the thread K2N, the warp, together. Furthermore, for example, the textile 100 may be a textile product formed by weaving the thread K11 to the thread K1N, the warp, and the thread K21 to the thread K2N, the weft, together. Furthermore, the textile 100 is a textile product formed by weaving so that the structurally colored threads are superposed on the thread K21 to the thread K2N that are colored threads. The optical property of the colored threads, the thread K1 to the thread KN, is changed through control by the control device 10, the structural color of the structurally colored threads is thus changed, and the textile 100 is thereby changed in design. The design of the textile is thus able to be changed dynamically because weaving is performed so that the structurally colored threads are superposed on the colored threads. Each of the thread K21 to the thread K2N is able to be independently controlled through control by the control device 10. Furthermore, only a specific region of the textile may be able to be controlled by short-circuiting of the thread K21 to the thread K2N.

### Case Where Colored Textile and Structurally Colored Textile Are Included

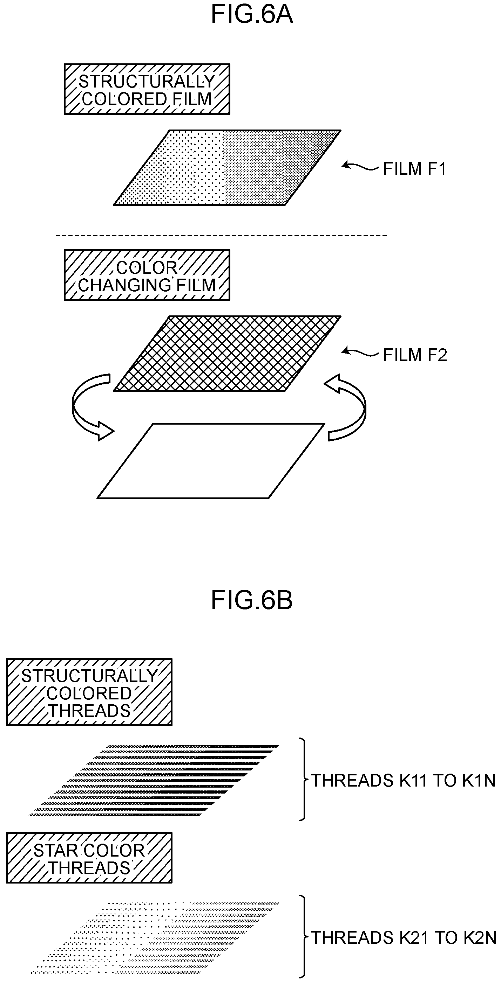

FIG. 6A to 6D is a diagram illustrating an example of a method of manufacturing a textile, according to the embodiment. Description similar to that for FIG. 1 and FIG. 5 will be omitted as appropriate. FIG. 6A is a diagram illustrating preparation for manufacturing the textile. A film F1 is a film that implements a semitransparent structural color and a film F2 is a film that is soft and has a variable optical property.

FIG. 6B is a diagram illustrating slitting for manufacturing the textile. A thread K11 to a thread K1N are threadlike pieces (structurally colored threads) formed by cutting the film F1 into long and thin pieces. Furthermore, a thread K21 to a thread K2N are threadlike pieces (colored threads) formed by cutting the film F2 into long and thin pieces.

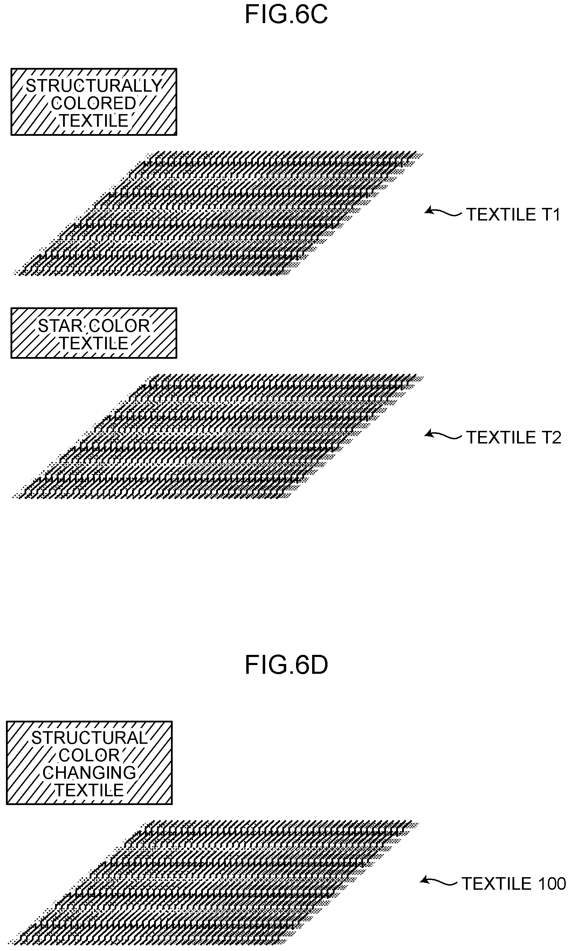

FIG. 6C and FIG. 6D are diagrams illustrating weaving for manufacturing the textile. A textile T1 (see FIG. 6C) is a textile product (structurally colored textile) formed by weaving the thread K11 to the thread K1N together. The textile T1 thus includes the structurally colored threads. Furthermore, a textile T2 (see FIG. 6C) is a textile product (colored textile) formed by weaving the thread K21 to the thread K2N together. The textile T2 thus includes the colored threads. A textile 100 (see FIG. 6D) is a textile product (textile) formed so that the structurally colored textile is superposed on the colored textile.

### 2. Modes of Use

Actual modes of use will be described hereinafter. For example, design information on a desired design change and time information (on a time to change the design, for example) may be set on an application installed on a terminal device 20, the design information and the time information may be thereby transmitted to the control device 10 via a network N, and the design of the textile 100 may be changed on the basis of the set design information and time information. The design may be converted to any RGB output information, for example, and the RGB output information may be displayed as a display. An interactive design change system that operates with an application in this manner may be provided.

Furthermore, the textile according to the embodiment may be used for, for example, curtains, furniture, and lamp shades. For example, the textile may be used for a curtain by arranging a circuit in a rail for the curtain. Furthermore, for example, the textile may be used for a lamp shade by arranging a circuit in a central portion of the lamp shade. These are just examples and the modes of use may be not particularly limited to these examples.

### 3. Configuration of Information Processing System

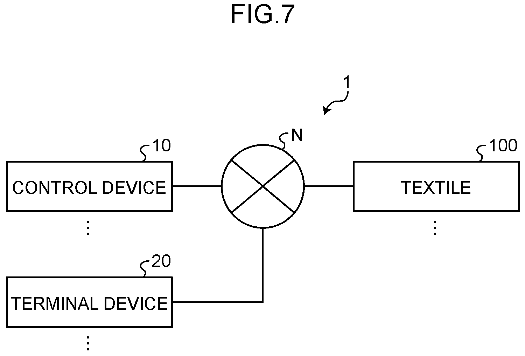

The following description is on an information processing system 1 illustrated in FIG. 7. As illustrated in FIG. 7, the information processing system 1 includes the control device 10, the terminal device 20, and a textile 100. The control device 10, the terminal device 20, and the textile 100 are connected to be able to communicate with one another by wire or wirelessly via a predetermined communication network (network N). FIG. 7 is a diagram illustrating an example of a configuration of the information processing system 1 according to the embodiment. The information processing system 1 illustrated in FIG. 7 may include a plurality of the control devices 10, a plurality of the terminal devices 20, and a plurality of the textiles 100.

The control device 10 is a control device for the textile 100. The control device 10 executes processing on the basis of information transmitted from, for example, the terminal device 20, via the network N. For example, the control device 10 executes processing for changing design of the textile 100. For example, the control device 10 executes processing for selectively supplying power in a top-contact manner. Furthermore, the control device 10 may estimate positional information on a user and perform control according to a viewing angle of the user, the viewing angle being based on the positional information on the user. For example, the control device 10 may perform control to change an optical property of the colored layer according to the viewing angle of the user.

The terminal device 20 is an information processing device used by a user. The terminal device 20 may be any device that is capable of implementing processing according to the embodiment. Furthermore, the terminal device 20 may be a smartphone, a tablet terminal, a notebook PC, a desktop PC, a mobile phone, or a device, such as a PDA or a microcontroller. The terminal device 20 transmits control information to the control device 10 according to settings input by a user, for example.

The textile 100 is a smart textile. The textile 100 is a textile including threads including: a colored layer having a variable optical property; and a structurally colored layer that implements a structural color by having a structure that reflects light from incident light, the light having wavelengths different from one another. Furthermore, the textile 100 may be a textile including: colored threads having a variable optical property; and structurally colored threads that implement a structural color by having a structure that reflects light from incident light, the light having wavelengths different from one another. Furthermore, the textile 100 may be a textile including: a colored textile having a variable optical property; and a structurally colored textile that implement a structural color by having a structure that reflects light from incident light, the light having wavelengths different from one another.

FIG. 7 illustrates a case where the control device 10 and the terminal device 20 are separate devices, but the control device 10 and the terminal device 20 may be integrated with each other.

### 4. First Effects

As described above, a textile according to the embodiment is characterized in that the textile includes: colored threads having a variable optical property; and structurally colored threads that implement a structural color by having a structure that reflects light from incident light, the light having wavelengths different from one another.

Dynamic control of the structural color is thereby enabled and enhancement of textile design expression is thus enabled. For example, effective use of the textile in curtains, furniture, and lamp shades is enabled. For example, design of a curtain is changed by use of the textile for the curtain. For example, design that has not been displayed on the curtain is able to be displayed, design that has been displayed on the curtain is able to be no longer displayed, or design that has been displayed on the curtain is able to be displayed in a more vivid color.

Furthermore, the textile is characterized in that the textile is formed by weaving so that the structurally colored threads are superposed on the colored threads.

The structural color is thereby able to be implemented.

Furthermore, the textile is characterized in that the textile includes the colored layer in the colored threads, the colored layer having an electrode exposed on a surface.

Supply of power is thereby able to be facilitated.

Furthermore, the textile is characterized in that the textile includes the structurally colored layer in the structurally colored threads, the structurally colored layer having an area exposed on a surface, the area being equal to or larger than a predetermined threshold.

The structural color is thereby able to be implemented.

Furthermore, the textile is characterized in that the textile includes a substrate in the threads, the substrate enabling only a specific wavelength to be transmitted through the substrate.

Durability of the textile is thereby able to be improved.

Furthermore, the textile is characterized in that the textile includes the colored layer in the colored threads, the colored layer being made from a material, such as electronic paper, a combination of a leucopigment and a heater, a variable transparency film, or a combination including organic EL, an LED, an optical fiber, or a diffuser.

The design expression is thereby able to be enhanced.

Furthermore, the textile is characterized in that the textile includes the colored threads having an optical property that is able to be changed through control by the control device 10.

The design expression is thereby able to be controlled.

Furthermore, the textile is characterized in that the textile includes the colored threads that are able to be independently controlled through control by the control device 10.

The design expression is thereby able to be controlled in detail.

Furthermore, the textile is characterized in that the textile includes the colored threads, of which only a specific region is made controllable by short-circuiting.

The design expression is thereby able to be controlled in detail.

Furthermore, the textile is characterized in that the textile includes the colored threads having an optical property that is able to be changed through control by the control device 10, the control being according to a viewing angle of a user, the viewing angle being based on positional information on the user, the positional information having been estimated by the control device 10.

The design expression is thereby able to be controlled according to the position of the user.

Furthermore, the textile is characterized in that the design of the textile is changed through control by the control device 10.

The textile design expression is thereby able to be enhanced.

Furthermore, the textile is characterized in that the textile is used for a curtain, furniture, or a lamp shade.

The design expression of soft and textured textiles, such as those for curtains, furniture, or lamp shades, is thereby able to be enhanced.

Furthermore, the textile is characterized in that the textile has a 3-ply structure.

The design expression of soft and textured textiles is thereby able to be enhanced.

### 5. Second Effects

As described above, a thread according to the embodiment is characterized in that the thread includes: a colored layer having a variable optical property; and a structurally colored layer that implements a structural color by having a structure that reflects light from incident light, the light having wavelengths different from one another.

Dynamic control of the structural color is thereby enabled and enhancement of design expression is thus enabled. For example, effective use of the thread for curtains, furniture, and lamp shades is enabled. For example, design of a curtain is changed by use of the thread in the curtain. For example, design that has not been displayed on the curtain is able to be displayed, design that has been displayed on the curtain is able to be no longer displayed, or design that has been displayed on the curtain is able to be displayed in a more vivid color.

Furthermore, the thread may be characterized in that the thread is formed by superposition of film materials.

The design expression is thereby able to be enhanced.

Furthermore, the thread may be characterized in that the thread includes the structurally colored layer formed on the colored layer.

The structural color is thereby able to be implemented.

Furthermore, the thread may be characterized in that the thread includes the colored layer having an electrode exposed on a surface.

Supply of power is thereby able to be facilitated.

Furthermore, the thread may be characterized in that the thread includes the structurally colored layer having an area exposed on a surface, the area being equal to or larger than a predetermined threshold.

The structural color is thereby able to be implemented.

Furthermore, the thread may be characterized in that the thread includes a substrate on the colored layer, the substrate enabling only a specific wavelength to be transmitted through the substrate.

The durability is thereby able to be improved.

Furthermore, the thread may be characterized in that the thread includes the colored layer made from a material, such as electronic paper, a combination of a leucopigment and a heater, a variable transparency film, or a combination including organic EL, an LED, an optical fiber, or a diffuser.

The design expression is thereby able to be enhanced.

Furthermore, the thread may be characterized in that the thread includes the colored layer having an optical property that is changed through control by the control device 10.

The design expression is thereby able to be controlled.

Furthermore, the thread may be characterized in that the thread is able to be independently controlled through control by the control device 10.

The design expression is thereby able to be controlled in detail.

Furthermore, the thread may be characterized in that only a specific region of the thread is made controllable by short-circuiting.

The design expression is thereby able to be controlled in detail.

Furthermore, the thread may be characterized in that the thread includes the colored layer having an optical property that is changed through control by the control device 10, the control being according to a viewing angle of a user, the viewing angle being based on positional information on the user, the positional information having been estimated by the control device 10.

The design expression is thereby able to be controlled according to the position of the user.

Furthermore, it may be characterized in that it includes a thread including: a colored layer having a variable optical property; and a structurally colored layer that implements a structural color by having a structure that reflects light from incident light, the light having wavelengths different from one another.

The design expression of soft and textured textiles is thereby able to be enhanced.

Furthermore, it may be characterized in that it has a 3-ply structure.

The design expression of soft and textured textiles is thereby able to be enhanced.

### 6. Third Effects

As described above, a textile according to the embodiment is characterized in that the textile includes: a colored textile having a variable optical property; and a structurally colored textile that implements a structural color by having a structure that reflects light from incident light, the light having wavelengths different from one another.

Dynamic control of the structural color is thereby enabled and enhancement of textile design expression is thus enabled. For example, the textile is able to be effectively used for curtains, furniture, and lamp shades, for example. For example, design of a curtain is changed by use of the textile for the curtain. For example, design that has not been displayed on the curtain is able to be displayed, design that has been displayed on the curtain is able to be no longer displayed, or design that has been displayed on the curtain is able to be displayed in a more vivid color.

Furthermore, the textile may be characterized in that the textile is formed by superposition of textiles.

The design expression is thereby able to be enhanced.

Furthermore, the textile may be characterized in that the textile includes the structurally colored textile superposed on the colored textile.

The structural color is thereby able to be implemented.

Furthermore, the textile may be characterized in that the textile includes a colored layer in threads of the colored textile, the colored layer having an electrode exposed on a surface.

Supply of power is thereby facilitated.

Furthermore, the textile may be characterized in that the textile includes a structurally colored layer in threads of the structurally colored textile, the structurally colored layer having an area exposed on a surface, the area being equal to or larger than a predetermined threshold.

The structural color is thereby able to be implemented.

Furthermore, the textile may be characterized in that the textile includes a substrate in the threads of the textile, the substrate enabling only a specific wavelength to be transmitted through the substrate.

The durability is thereby able to be improved.

Furthermore, the textile may be characterized in that the textile includes the colored layer in the threads of the colored textile, the colored layer being made from a material, such as electronic paper, a combination of a leucopigment and a heater, a variable transparency film, or a combination including organic EL, an LED, an optical fiber, or a diffuser.

The design expression is thereby able to be enhanced.

Furthermore, the textile may be characterized in that the textile includes the colored textile having an optical property that is able to be changed through control by the control device 10.

The design expression is thereby able to be controlled.

Furthermore, the textile may be characterized in that the textile includes threads in the colored textile, the threads being able to be independently controlled through control by the control device 10.

The design expression is thereby able to be controlled in detail.

Furthermore, the textile may be characterized in that threads are included in the colored textile, only a specific region of the threads being made controllable by short-circuiting.

The design expression is thereby able to be controlled in detail.

Furthermore, the textile may be characterized in that the textile includes the colored textile having the optical property that is able to be changed through the control by the control device 10, the control being according to a viewing angle of a user, the viewing angle being based on positional information on the user, the positional information having been estimated by the control device 10.

The design expression is thereby able to be controlled according to the position of the user.

Furthermore, the textile may be characterized in that the textile changes in design through control by the control device 10.

The textile design expression is thereby able to be enhanced.

Furthermore, the textile may be characterized in that the textile is used for a curtain, furniture, or a lamp shade.

The design expression of soft and textured textiles, such as those for curtains, furniture, or lamp shades, is thereby able to be enhanced.

Furthermore, the textile may be characterized in that the textile has a 3-ply structure.

The design expression of soft and textured textiles is thereby able to be enhanced.

### 7. Others

Furthermore, of the processing described with respect to the embodiment, all or part of any processing described as being performed automatically may be performed manually, or all or part of any processing described as being performed manually may be performed automatically by a publicly known method. In addition, the sequences of the processing, the specific names, and the information including the various data and parameters described above and illustrated in the drawings may be optionally modified unless particularly stated otherwise. For example, the various kinds of information illustrated in the drawings are not limited to those illustrated therein.

Furthermore, the elements of each device in the drawings have been illustrated functionally and/or conceptually, and are not necessarily physically configured as illustrated in the drawings. That is, specific modes of separation and integration of each device are not limited to those illustrated in the drawings, and all or part of each device may be configured to be functionally or physically separated or integrated in any units according to various loads and use situations.

A combination may be made as appropriate from the embodiment described above, so long as no contradiction in the processing is caused by the combination.

Some of embodiments of the present application have been described in detail on the basis of the drawings, but these are just examples, and the present invention may be implemented in other modes, to which various modifications and improvements have been made on the basis of the aspects described in the disclosure of the invention section and knowledge of those skilled in the art.

The following configurations also belong to the technical scope of the present disclosure.

Furthermore, the following configurations also belong to the technical scope of the present disclosure.
(1) A thread, including:
   a colored layer having a variable optical property;
      and
   a structurally colored layer that implements a structural color by having a structure that reflects light from incident light, the light having wavelengths different from one another.
(2) The thread according to (1) above, wherein the thread has been formed by superposition of film materials.
(3) The thread according to (1) or (2) above, including the structurally colored layer formed on the colored layer.
(4) The thread according to any one of (1) to (3) above, including the colored layer having an electrode exposed on a surface.
(5) The thread according to any one of (1) to (4) above, including the structurally colored layer having an area exposed on a surface, the area being equal to or larger than a predetermined threshold.
(6) The thread according to any one of (1) to (5) above, including a substrate on the colored layer, the substrate being capable of transmitting only a specific wavelength through the substrate.
(7) The thread according to any one of (1) to (6) above, including the colored layer made from a material that is electronic paper, a combination of a leucopigment and a heater, a variable transparency film, or a combination including organic EL, an LED, an optical fiber, or a diffuser.
(8) The thread according to any one of (1) to (7) above, including the colored layer having an optical property that is changed through control by a control device.
(9) The thread according to any one of (1) to (8) above, wherein the thread is capable of being controlled independently through control by a/the control device.
(10) The thread according to any one of (1) to (9) above, wherein only a specific region of the thread is made controllable by short-circuiting.
(11) The thread according to any one of (1) to (10) above, including the colored layer having an optical property that is changed through control by a/the control device, the control being according to a viewing angle of a user, the viewing angle being based on positional information on the user, the positional information having been estimated by the control device.
(12) A textile, including threads including: a colored layer having a variable optical property; and a structurally colored layer that implements a structural color by having a structure that reflects light from incident light, the light having wavelengths different from one another.
(13) The textile according to (12) above, wherein the textile has a 3-ply structure.

Furthermore, the following configurations also belong to the technical scope of the present disclosure.
(1) A textile, including:
   a colored textile having a variable optical property;
      and
   a structurally colored textile that implements a structural color by having a structure that reflects light from incident light, the light having wavelengths different from one another.
(2) The textile according to (1) above, wherein the textile has been formed by superposition of textiles.
(3) The textile according to (1) or (2) above, including the structurally colored textile superposed on the colored textile.
(4) The textile according to any one of (1) to (3) above, including a colored layer in threads of the colored textile, the colored layer having an electrode exposed on a surface.
(5) The textile according to any one of (1) to (4) above, including a structurally colored layer in threads of the structurally colored textile, the structurally colored layer having an area exposed on a surface, the area being equal to or larger than a predetermined threshold.
(6) The textile according to any one of (1) to (5) above, including a substrate in threads of the textile, the substrate being capable of transmitting only a specific wavelength through the substrate.
(7) The textile according to any one of (1) to (6) above, including a colored layer in the colored textile, the colored layer being made from a material that is electronic paper, a combination of a leucopigment and a heater, a variable transparency film, or a combination including organic EL, an LED, an optical fiber, or a diffuser.
(8) The textile according to any one of (1) to (7) above, including the colored textile having an optical property that is able to be changed through control by a control device.
(9) The textile according to any one of (1) to (8) above, including threads in the colored textile, the threads being capable of being controlled independently through control by a/the control device.
(10) The textile according to any one of (1) to (9) above, including threads in the colored textile, only a specific region of the threads being made controllable by short-circuiting.
(11) The textile according to any one of (1) to (10) above, including the colored textile having an optical property that is able to be changed through control by a/the control device, the control being according to a viewing angle of a user, the viewing angle being based on positional information on the user, the positional information having been estimated by the control device.
(12) The textile according to any one of (1) to (11) above, wherein the textile changes in design through control by a/the control device.
(13) The textile according to any one of (1) to (12) above, wherein the textile is used for a curtain, furniture, or a lamp shade.
(14) The textile according to any one of (1) to (13) above, wherein the textile has a 3-ply structure.

### Reference Signs List

- 1: INFORMATION PROCESSING SYSTEM
- 10: CONTROL DEVICE
- 20: TERMINAL DEVICE
- 100: TEXTILE
- N: NETWORK

## Claims

1. A textile, including:
colored threads having a variable optical property;
and
structurally colored threads that implement a structural color by having a structure that reflects light from incident light, the light having wavelengths different from one another.

2. The textile according to claim 1, wherein the textile has been formed by weaving so that the structurally colored threads are superposed on the colored threads.

3. The textile according to claim 1, including a colored layer in the colored threads, the colored layer having an electrode exposed on a surface.

4. The textile according to claim 1, including a structurally colored layer in the structurally colored threads, the structurally colored layer having an area exposed on a surface, the area being equal to or larger than a predetermined threshold.

5. The textile according to claim 1, including a substrate in the threads, the substrate enabling only a specific wavelength to be transmitted through the substrate.

6. The textile according to claim 1, including a colored layer in the colored threads, the colored layer being made from a material that is: electronic paper; a combination of a leucopigment and a heater; a variable transparency film; or a combination including organic EL, an LED, an optical fiber, or a diffuser.

7. The textile according to claim 1, including the colored threads having an optical property that is able to be changed through control by a control device.

8. The textile according to claim 1, including the colored threads capable of being independently controlled through control by a control device.

9. The textile according to claim 1, including the colored threads, only a specific region of the colored threads being made controllable by short-circuiting.

10. The textile according to claim 1, including the colored threads having an optical property that is able to be changed through control by a control device, the control being according to a viewing angle of a user, the viewing angle being based on positional information on the user, the positional information having been estimated by a control device.

11. The textile according to claim 1, wherein the textile changes in design through control by a control device.

12. The textile according to claim 1, wherein the textile is used for a curtain, furniture, or a lamp shade.

13. The textile according to claim 1, wherein the textile has a 3-ply structure.
